# EUROPEAN PATENT APPLICATION

(11) **EP 4 641 738 A1**
(43) Date of publication of application: **29.10.2025**
(21) Application number: 23920724.4
(22) Date of filing: 12.09.2023
(51) Int. Cl.: H01M 10/0569, H01M 10/0568, H01M 10/054

(54) **ELECTROLYTE FOR SODIUM-ION SECONDARY BATTERY, SODIUM-ION SECONDARY BATTERY, AND ELECTRIC APPARATUS**

(30) Priority: 06.02.2023 CN 202310065507
(71) Applicant: Contemporary Amperex Technology (Hong Kong) Limited, Hong Kong (HK)
(72) Inventor: HUANG, Qisen, Ningde, Fujian 352100 (CN)
(74) Representative: Gong, Jinping
(86) International application number: PCT/CN2023/118202
(87) International publication number: WO 2024/164532

(57) **Abstract**

An electrolyte for a sodium-ion secondary battery, a sodium-ion secondary battery, and an electric apparatus. The electrolyte for the sodium-ion secondary battery comprises a metal sodium salt and a solvent, wherein the desolvation energy of a sodium ion-solvent complex formed by sodium ions of the metal sodium salt and the solvent is less than or equal to 100 kJ/mol. In this way, the reaction kinetics of the sodium-ion secondary battery at a low temperature can be improved, and the low-temperature performance of the sodium-ion secondary battery is improved.

## Description

### CROSS-REFERENCE TO RELATED APPLICATION

The present application claims priority and benefit to Chinese Patent Application No. 202310065507.4, filed to China National Intellectual Property Administration on February 6, 2023 and entitled "ELECTROLYTE FOR SODIUM-ION SECONDARY BATTERY, SODIUM-ION SECONDARY BATTERY, AND ELECTRIC APPARATUS", the content of which is incorporated herein by reference in its entirety.

### TECHNICAL FIELD

The present application relates to the field of batteries, and in particular, to an electrolytic solution for use in a sodium secondary battery, a sodium secondary battery, and an electric device.

### BACKGROUND

Energy conservation and emission reduction are key to sustainable development, which in turn promotes the adjustment of energy structure and drives the development and application of battery technologies. As an essential component of secondary batteries, the electrolytic solution plays an important role as an ion carrier in electrochemical reactions. However, the commercially available electrolytic solutions for use in sodium secondary batteries exhibit increased viscosity and are prone to solidification at a low temperature. This results in issues such as low ionic conductivity, high electrochemical impedance, and slow kinetic processes, all of which significantly affect the service life and cycle stability of the batteries, further limiting the practical application of sodium secondary batteries at a low temperature.

### SUMMARY

In view of the issues described above, the present application provides an electrolytic solution for use in a sodium secondary battery, a sodium secondary battery, and an electric device, and the reaction kinetics of the sodium secondary battery at a low temperature can be improved, thereby enhancing the low-temperature performance of the sodium secondary battery.

In a first aspect, the present application provides an electrolytic solution for use in a sodium secondary battery, the electrolytic solution including a sodium metal salt and a solvent, where desolvation energy of a sodium ion-solvent complex formed by sodium ions of the sodium metal salt and the solvent is less than or equal to 100 kJ/mol.

In the technical solutions of embodiments of the present application, the desolvation energy of the complex (Na⁺-(solvent)ₓ complex) formed by the sodium ions and the solvent in the electrolytic solution can be regulated by adjusting the solvent type of the electrolytic solution. This design results in a low energy barrier for the desolvation process of the sodium ion-solvent complex at a low temperature, with a weak affinity between the sodium ions and the solvent molecules. As a result, the problem of desolvation difficulty of solvated sodium ions at a low temperature is alleviated, thus improving the reaction kinetics of the sodium secondary battery at a low temperature and enhancing the low-temperature performance of the sodium secondary battery.

In some embodiments, the molar concentration of the sodium metal salt is 0.1-1.2 mol/L; optionally, the molar concentration of the sodium metal salt is 0.2-0.8 mol/L.

By controlling the concentration of the sodium metal salt at a low level, the affinity between the sodium ions and the solvent molecules can be weakened, thus more effectively improving the reaction kinetics of the battery at a low temperature.

In some embodiments, the solvent includes a first solvent and a second solvent. The first solvent includes a chain ether solvent, and the second solvent includes one or more of diethyl ether and cyclic ethers.

The first solvent can increase the solubility of the sodium metal salt and improve the conductivity of the electrolytic solution. The second solvent can reduce the desolvation barrier of the sodium ion-solvent complex and enhance the desolvation process of the sodium ion-solvent complex. Through the synergistic effect between the first solvent and the second solvent, the conductivity and reaction kinetics of the electrolytic solution can be improved, thereby more effectively enhancing the low-temperature electrochemical performance of the battery.

In some embodiments, the first solvent includes one or more of glycol dimethyl ether, glycol diethyl ether, diglyme, triglyme, tetraglyme, dipropyl ether, and dibutyl ether; and/or the second solvent includes one or more of diethyl ether, 1,3-dioxolane, tetrahydrofuran, and methyltetrahydrofuran.

In some embodiments, the volume ratio of the first solvent to the second solvent is greater than or equal to 1:1 and less than or equal to 10:1; optionally, the volume ratio of the first solvent to the second solvent is greater than or equal to 1.5:1 and less than or equal to 5:1. By controlling the volume ratio of the first solvent to the second solvent within the range described above, the solubility of the sodium metal salt in the solvent can be increased, thereby regulating the concentration of the sodium metal salt; the desolvation energy of the sodium ion-solvent complex can also be reduced, thereby more effectively enhancing the low-temperature electrochemical performance of the battery.

In some embodiments, the sodium metal salt includes one or more of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethylsulfonyl)imide. The sodium metal salts described above have high ionic conductivity and strong electrochemical stability, which facilitates the improvement of the electrochemical performance of the battery at a low temperature.

In a second aspect, the present application provides a sodium secondary battery, which includes the electrolytic solution for use in a sodium secondary battery in the embodiments described above.

In the technical solutions of the embodiments of the present application, the desolvation energy of the sodium ion-solvent complex in the electrolytic solution of the sodium secondary battery is less than or equal to 100 kJ/mol. This design results in a low energy barrier for the desolvation process of the sodium ion-solvent complex of the sodium secondary battery at a low temperature, with a weak affinity between the sodium ions and the solvent molecules. As a result, the problem of desolvation difficulty of solvated sodium ions at a low temperature is alleviated, thus improving the reaction kinetics of the sodium secondary battery at a low temperature and enhancing the low-temperature performance of the sodium secondary battery.

In some embodiments, the sodium secondary battery is a negative electrode-free sodium secondary battery. The negative electrode structure of the negative electrode-free battery in an initial state only includes a current collector, and no negative electrode active material is provided on the surface of the current collector. After the first charge of the negative electrode-free sodium secondary battery, the sodium metal in the positive electrode material migrates to the negative electrode side and is deposited on the surface of the negative electrode current collector. Some sodium metal remains on the surface of the negative electrode current collector, and during subsequent charge-discharge cycles, the sodium metal undergoes deposition and stripping on the surface of the negative electrode current collector to achieve cycling. In this embodiment, at a low temperature, the desolvation energy barrier of the sodium ion-solvent complex in the electrolytic solution is low, and the deposition and stripping of sodium are facilitated, with high low-temperature reaction activity.

In some embodiments, the battery includes a negative electrode, and the negative electrode includes a negative electrode current collector and a negative electrode active material; the negative electrode active material includes one or more of a silicon-based material, a silicon-carbon material, a carbon material, and a selenium-based material. The desolvation energy barrier of the sodium ion-solvent complex in the electrolytic solution is low, allowing the sodium ions to easily intercalate into the negative electrode active material described above and also easily deintercalate from the negative electrode active material described above, exhibiting excellent low-temperature reaction activity. In addition, during the charge-discharge cycles of the battery, the structure changes of the active material are minor, which is beneficial to extending the service life of the battery.

In some embodiments, the battery includes a positive electrode, and the positive electrode includes a positive electrode current collector and a positive electrode active material; the positive electrode active material includes one or more of a transition metal oxide, a polyanion compound, and a Prussian blue analog. The sodium ions are easily intercalated into the positive electrode active material described above, and are also easily deintercalated from the positive electrode active material described above, exhibiting excellent low-temperature reaction activity. In addition, during the charge-discharge cycles of the battery, the structure changes of the active material are minor, which is beneficial to extending the service life of the battery.

In some embodiments, the membrane resistance of the positive electrode is 0.1 Ω-50 Q; optionally, the membrane resistance of the positive electrode is 0.1 Ω-10 Q. The value of the membrane resistance affects the desolvation process of the sodium ion-solvent complex to a certain extent. A low membrane resistance results in reduced electrode polarization, and reduced concentration polarization at a low temperature, such that the desolvation can be promoted. By setting the membrane resistance of the positive electrode plate within this resistance range, the effect of the desolvation process is further optimized, which is more conducive to improving the low-temperature performance of the battery.

In a third aspect, the present application provides an electric device including the aforementioned sodium secondary battery. The sodium secondary battery has excellent low-temperature performance.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and are not to be construed as limiting the scope of the present application. Furthermore, the same reference numerals in all the drawings denote identical components. In the drawings:
FIG. 1 is a schematic structural diagram of a sodium secondary battery according to some embodiments of the present application;
FIG. 2 is a schematic diagram of an exploded structure of a sodium secondary battery according to some embodiments of the present application;
FIG. 3 is a schematic diagram of an exploded structure of a battery cell according to some embodiments of the present application; and
FIG. 4 is a schematic structural diagram of a vehicle according to some embodiments of the present application.

### DETAILED DESCRIPTION

Embodiments of the technical solutions of the present application are described in detail below. The following examples are only for illustrating the technical solutions of the present application more clearly, and therefore are only used as examples and cannot be used to limit the protection scope of the present application.

Unless otherwise defined, all technical and scientific terms used herein have the same meaning as commonly understood by those skilled in the art to which the present application belongs. The terms used herein are only used to describe specific examples and are not intended to limit the present application. The terms "include", "comprise", "have", and any variants thereof in the specification and claims of the present application and the above description of the drawings are intended to cover non-exclusive inclusion.

In the description of the embodiments of the present application, technical terms such as "first" and "second" are only used to distinguish different objects and cannot be understood as indicating or implying relative importance or implicitly indicating the number, specific order, or primary and secondary relationship of the indicated technical features. In the description of the embodiments of the present application, unless otherwise specifically defined, "a plurality of" means two or more than two.

Reference in the present application to "an embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may represent: the existence of A alone, the simultaneous existence of A and B, and the existence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

Currently, considering the development of the market situation, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, electric vehicles, as well as in military equipment, aerospace and other fields. With the continuous expansion of the application fields of power batteries, the market demand is also constantly increasing. The performance stability of these batteries under various operating conditions, particularly in low-temperature environments (less than or equal to 0 °C), has become a research focus.

The inventor has noticed that, as the ambient temperature decreases, the viscosity of conventional carbonate-based electrolytic solutions gradually increases, leading to a decrease in the reaction rate of sodium secondary batteries, which is extremely detrimental to the low-temperature performance stability of the sodium secondary batteries. Although linear carboxylates with low viscosity can be added as cosolvents to the electrolytic solution system to reduce the viscosity of the system, carboxylates are prone to oxidation during the cycling process of sodium secondary batteries, which in turn reduces the capacity of the sodium secondary batteries.

To address the issue of poor low-temperature performance of sodium secondary batteries, the applicant, after research, has found that by lowering the desolvation energy of sodium ion-solvent complexes in the electrolytic solution, the energy barrier for the desolvation process of these complexes can be reduced, thereby improving the chemical reaction activity of the sodium secondary batteries at a low temperature and enhancing the low-temperature performance of the sodium secondary batteries.

Based on the above considerations, to address the issue of poor low-temperature performance of sodium secondary batteries, the inventor has conducted in-depth research and designed an electrolytic solution for use in sodium secondary batteries. The electrolytic solution for the sodium secondary battery includes a sodium metal salt and a solvent, where the desolvation energy of a sodium ion-solvent complex formed by sodium ions of the sodium metal salt and the solvent is less than or equal to 100 kJ/mol. Through the method described above, the energy barrier for the desolvation process of the sodium ion-solvent complex can be reduced, thereby enhancing the low-temperature performance of the sodium secondary battery.

The electrolytic solution is used in sodium secondary batteries, which refer to batteries that can continue to be used after discharging by reactivating their active materials through charging. By utilizing the reversibility of chemical reactions, the interconversion of chemical energy and electrical energy is achieved, allowing for multiple charge and discharge cycles.

Typically, a secondary battery includes a positive electrode plate, a negative electrode plate, a separation film, and an electrolyte. The separation film is provided between the positive electrode plate and the negative electrode plate for isolation. The electrolyte conducts ions between the positive electrode plate and the negative electrode plate.

Specifically, the electrolytic solution includes an electrolyte salt and a solvent. When the electrolyte salt is dissolved, it forms electrolyte ions, and conductivity is achieved through the movement of these ions in the electrolyte salt. When the battery discharges, the negative electrode absorbs metal cations from the electrolytic solution and releases electrical energy. During charging of the battery, the negative electrode releases metal cations back into the electrolytic solution. During charging and discharging process, the electrolyte ions need to be desolvated, which refers to the phenomenon where metal electrolyte ions in the electrolytic solution are separated from the solvent molecules that surround them. This is a process of interfacial charge transfer. The electrolytic solution in sodium secondary batteries contains sodium ions, and the batteries primarily work by the movement of sodium ions between the positive electrode and the negative electrode.

For sodium secondary batteries, the electrodeposition process of sodium ions on the negative electrode plate includes the following steps:
(1) The sodium ions dissolved in the electrolytic solution form a Na⁺-(solvent)ₓ complex with the solvent molecules, and the solvated sodium ions are transferred from the electrolytic solution to the surface of the negative electrode plate.
(2) The solvated sodium ions are desolvated on the surface of the negative electrode plate, and the Na⁺-(solvent)ₓ complex is desolvated to form free sodium ions.
(3) The desolvated sodium ions pass through the solid electrolyte interface (SEI).
(4) The sodium ions combine with electrons in the negative electrode plate and are reduced to sodium atoms.

The desolvation process typically exhibits a high energy barrier, and its kinetic process is highly temperature-sensitive. Therefore, it is generally considered that the desolvation process is the rate-determining step at a low temperature, particularly during high-rate cycling.

In this embodiment, by controlling the desolvation energy of the sodium ion-solvent complex to be less than or equal to 100 kJ/mol, the desolvation energy barrier of the sodium ion-solvent complex can be reduced, thereby facilitating the desolvation of the sodium ion-solvent complex. As the desolvation energy decreases, the sodium ions more easily pass through the SEI and combine with electrons, and the internal reaction activity of the sodium secondary battery becomes stronger, which increases the chemical reaction rate inside the battery at a low temperature, thereby enhancing the low-temperature performance of the sodium secondary battery.

The desolvation energy is less than or equal to 100 kJ/mol. The method for testing desolvation energy involves using a Na⁺-(solvent)ₓ complex as an example. Various types of solvents are employed, and a Vmp3 electrochemical workstation is used to conduct alternating current impedance testing on electrolytic solution systems with different solvents, such that the impedance spectrum for the Na⁺ desolvation process is obtained. The desolvation energy of the Na⁺-(solvent)ₓ complex in the electrolytic solution can be determined according to the Arrhenius equation.

According to some embodiments of the present application, the molar concentration of the sodium metal salt is 0.1-1.2 mol/L (e.g., 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1.0 mol/L, 1.1 mol/L, or 1.2 mol/L); optionally, the molar concentration of the sodium metal salt is 0.2-0.8 mol/L (e.g., 0.2 mol/L, 0.3 mol/L, 0.4 mol/L, 0.5 mol/L, 0.6 mol/L, 0.7 mol/L, or 0.8 mol/L). Alternatively, the molar concentration of the sodium metal salt falls within a range formed by any two of the values described above, for example, the molar concentration of the metal salt is 0.2-0.5 mol/L, 0.5-0.8 mol/L, 0.3-0.7 mol/L, 0.4-0.6 mol/L, 0.5-1.0 mol/L, etc.

The molar concentration of the sodium metal salt refers to the molar concentration of the sodium metal salt as a whole. For example, when the sodium metal salt is sodium hexafluorophosphate, the molar concentration range of sodium hexafluorophosphate is 0.1-1.2 mol/L. Optionally, the molar concentration range of sodium hexafluorophosphate is 0.2-0.8 mol/L.

As the concentration of the sodium metal salt decreases, the affinity between the sodium ions and the solvent molecules weakens, facilitating the separation of sodium ions from the solvent molecules and thereby accelerating the electrochemical reaction rate. By setting the molar concentration range of the sodium metal salt within the range described above, while ensuring sufficient battery capacity, the sodium ions can also be easily separated from the solvent at a low temperature, thereby increasing the rate of deposition or intercalation of sodium ions on the negative electrode, which is conducive to enhancing the low-temperature performance of the sodium secondary battery.

According to some embodiments of the present application, the solvent includes a first solvent and a second solvent. The first solvent includes a chain ether solvent, and the second solvent includes one or more of diethyl ether and cyclic ethers.

The chain ether solvent exhibits low viscosity, generally less than 1.2 mPa·s, which facilitates the transport of sodium ions at a low temperature. Additionally, the chain ether solvent has a strong complexing interaction with sodium ions, which can increase the solubility of the sodium metal salt and elevate the sodium ion concentration. Using the chain ether as a solvent in electrolytic solution can significantly improve the conductivity of the electrolytic solution, thereby increasing the reaction rate during the charging and discharging processes of the battery.

Both diethyl ether and cyclic ethers can weaken the solvation effect between the sodium ion and the solvent, which is conducive to promoting the desolvation process of solvated sodium ions, reducing the desolvation energy, and further enhancing the low-temperature performance of the sodium secondary battery.

The synergistic effect between the first solvent and the second solvent, in one aspect, allows the electrolytic solution to have a high ion transport rate, improving the conductivity of the electrolytic solution; in another aspect, it forms a weakly solvated electrolytic solution, which promotes the desolvation process of solvated sodium ions, thereby enhancing the low-temperature performance of the sodium secondary battery.

According to some embodiments of the present application, the first solvent includes one or more of glycol dimethyl ether (DME), glycol diethyl ether (DEE), diglyme (DEGDME), triglyme (TRGDME), tetraglyme (TEGDME), dipropyl ether, and dibutyl ether; and/or the second solvent includes one or more of diethyl ether, 1,3-dioxolane (DOL), tetrahydrofuran (THF), and methyltetrahydrofuran (Me-THF).

A stable electrode/electrolytic solution interface on the surface of the negative electrode plate can be constructed by the ether solvent molecules described above, resulting in the formation of a stable SEI, thereby reducing electrochemical polarization.

In addition, the ether solvents described above exhibit good compatibility with the metal negative electrode plate, and can effectively passivate the metal negative electrode plate. This results in the formation of a thin, uniform, and dense SEI on the surface of the metal negative electrode plate, further preventing dendrite formation and inhibiting the further thickening of the SEI due to dendrite growth and evolution, which is conducive to promoting the smooth conduction of sodium ions.

According to some embodiments of the present application, the volume ratio of the first solvent to the second solvent is greater than or equal to 1:1 and less than or equal to 10:1 (e.g., 1:1, 1.5:1, 2:1, 3:1, 4:1, 4.5:1, 5:1, 6:1, 7:1, 8:1, 9:1, 9.5:1, or 10:1); optionally, the volume ratio of the first solvent to the second solvent is greater than or equal to 1.5:1 and less than or equal to 5:1 (e.g., 1.5:1, 2:1, 3:1, 4:1, 4.5:1, or 5:1). Alternatively, the volume ratio falls within a range formed by any two of the values described above. For example, the volume ratio of the first solvent to the second solvent may be 2:1 to 4:1, 1.5:1 to 4.5:1, 3:1 to 5:1, 4:1 to 9:1, etc.

By designing the volume ratio of the first solvent to the second solvent to be within the range described above, the conductivity of the electrolytic solution can be improved and the solvation effect between the sodium ion and the solvent can also be effectively weakened, which is conducive to promoting the electrochemical reaction rate of the electrolytic solution.

According to some embodiments of the present application, the sodium metal salt includes one or more of sodium hexafluorophosphate (NaPF₆), sodium difluoro(oxalato)borate (NaDFOB), sodium tetrafluoroborate (NaBF₄), sodium bis(oxalato)borate (NaBOB), sodium perchlorate (NaClO₄), sodium hexafluoroarsenate (NaAsF₆), sodium bis(fluorosulfonyl)imide (NaFSI), sodium trifluoromethanesulfonate (NaOTf), and sodium bis(trifluoromethylsulfonyl)imide (NaTFSI).

The sodium salts described above have high ionic conductivity and strong electrochemical stability, which facilitates the improvement of the electrochemical performance of the battery at a low temperature.

In some embodiments, the electrolytic solution further includes an additive. For example, the additive may include a negative-electrode film-forming additive, or may include a positive-electrode film-forming additive, or may include an additive capable of improving certain properties of the battery, such as an additive for improving the overcharge performance of the battery, an additive for improving the high-temperature performance of the battery, and an additive for improving the low-temperature performance of the battery.

The present application further provides a sodium secondary battery, including the electrolytic solution for use in a sodium secondary battery in the aforementioned embodiments.

In one embodiment, the sodium secondary battery is a negative electrode-free sodium secondary battery. No negative electrode means that in the initial state, the negative electrode structure only includes a current collector without an active material. After the first charge is completed, the metal in the positive electrode material migrates to the surface of the negative electrode current collector, forming a metal layer on the negative electrode current collector. During the charging process, the metal electrolyte ions in the electrolytic solution combine with electrons on the surface and/or in the pores of the negative electrode current collector, undergoing deposition. During the discharging process, the deposited layer on the surface of the negative electrode current collector is stripped and dissolved, reverting to metal electrolyte ions and electrons, which then move back to the positive electrode, and this process repeats continuously. Compared to conventional secondary batteries, the energy density of the negative electrode-free secondary battery is further improved, with higher safety and stability, as well as lower weight and volume. The sodium secondary battery includes the electrolytic solution according to the aforementioned embodiment, such that the desolvation energy barrier of the solvated sodium ions in the electrolytic solution is low at a low temperature, and the solvated sodium ions easily pass through the SEI and are deposited on the surface of the negative electrode current collector. Meanwhile, the electrolytic solution has high electrical conductivity and strong transport capacity for sodium ions, thus exhibiting excellent low-temperature reaction activity.

According to some embodiments of the present application, the negative electrode of the sodium secondary battery may also be a conventional negative electrode structure, specifically including a negative electrode current collector and a negative electrode film layer disposed on the negative electrode current collector, where the negative electrode film layer includes a negative electrode active material.

The negative electrode current collector may be made of conventional metal foil or be a composite current collector (for example, a metal material may be disposed on a polymer substrate to form a composite current collector). As an example, the negative electrode current collector may be made of copper foil.

The specific type of the negative electrode active material is not limited and may include active materials known in the art that can be used for the negative electrodes of sodium secondary batteries. Those skilled in the art can select them according to actual needs. As an example, the negative electrode active material may include, but is not limited to, one or more of a silicon-based material, a silicon-carbon material, a carbon material, and a selenium-based material. Specifically, the negative electrode active material includes one or more of artificial graphite, natural graphite, hard carbon, soft carbon, a silicon-based material, and a tin-based material. The silicon-based material may be selected from one or more of elemental silicon, a silicon-oxygen compound (such as silicon monoxide), a silicon-carbon composite, a silicon-nitrogen composite, and a silicon alloy. The selenium-based material may be selected from one or more of elemental selenium, a selenium-oxygen compound, and a selenium alloy. These materials are all commercially available.

The working principle of the sodium secondary battery is based on the intercalation and deintercalation of metal cations from the sodium metal salt. During charging of the battery, the sodium ions are deintercalated from the positive electrode, pass through the separation film in the electrolytic solution, and are intercalated into the negative electrode active material. Meanwhile, electrons flow from the positive electrode to the negative electrode through the external circuit. During discharging of the battery, the sodium ions are deintercalated from the negative electrode active material, pass through the separation film in the electrolytic solution, and are intercalated into the positive electrode. Meanwhile, electrons flow from the negative electrode to the positive electrode through the external circuit.

The negative electrode active material can reduce the negative electrode impedance, increase the electrode capacity, and reduce the abnormal plating of sodium metal. Sodium metal is easily intercalated into the negative electrode active material described above, and is also easily deintercalated. During the charge-discharge cycles of the battery, the structure changes of the active material are minor, which is beneficial to extending the service life of the battery.

The sodium secondary battery includes the electrolytic solution according to the aforementioned embodiment, such that the desolvation energy barrier of the solvated sodium ions in the electrolytic solution is low at a low temperature, and the solvated sodium ions are easily intercalated into the negative electrode active material. Meanwhile, the electrolytic solution has high electrical conductivity and strong transport capacity for sodium ions, thus also exhibiting excellent low-temperature reaction activity.

In some embodiments, to further improve the energy density of the battery, the negative electrode active material may include a silicon-based material.

Typically, the negative electrode film layer further optionally includes a binder, a conductive agent, and other optional auxiliary agents.

As an example, the conductive agent may be one or more of superconducting carbon, acetylene black, carbon black, Ketjen black, a carbon dot, a carbon nanotube, graphene, and a carbon nanofiber.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional auxiliary agents may be thickening agents, dispersants (such as sodium carboxymethylcellulose (CMC-Na)), or PTC thermistor materials.

The sodium secondary battery includes a positive electrode plate, the positive electrode plate generally includes a positive electrode current collector and a positive electrode film layer disposed on the positive electrode current collector, and the positive electrode film layer includes a positive electrode active material.

The positive electrode current collector may be made of a conventional metal foil or be a composite current collector (a metal material may be disposed on a polymer substrate to form a composite current collector). As an example, the positive electrode current collector may be made of aluminum foil.

The specific type of the positive electrode active material is not limited and may include active materials known in the art that can be used for the positive electrodes of sodium secondary batteries. Those skilled in the art can select them according to actual needs.

As an example, the positive electrode active material may include, but is not limited to, at least one of a sodium transition metal oxide, a polyanionic compound, and a Prussian blue compound. In the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1. The polyanionic compound may be a class of compounds having sodium ions, transition metal ions, and tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻. The polyanionic compound may also be a class of compounds having sodium ions, transition metal ions, tetrahedral (YO₄)ⁿ⁻ anion units, and halogen anions. The transition metal may be at least one of Mn, Fe, Ni, Co, Cr, Cu, Ti, Zn, V, Zr, and Ce; Y may be at least one of P, S, and Si, and n represents the valence state of (YO₄)ⁿ⁻; and the halogen may be at least one of F, Cl, and Br. The polyanionic compound may also be a class of compounds having sodium ions, tetrahedral (YO₄)ⁿ⁻ anion units, polyhedral units (ZO_{y})^{m+}, and optionally halogen anions. Y may be at least one of P, S, and Si, and n represents the valence state of (YO₄)ⁿ⁻; Z represents a transition metal, which may be at least one of Mn, Fe, Ni, Co, Cr, Cu, Ti, Zn, V, Zr, and Ce, and m represents the valence state of (ZO_{y})^{m+}; and the halogen may be at least one of F, Cl, and Br. The polyanionic compound is, for example, at least one of NaFePO₄, Na₃V₂(PO₄)₃, NaM'PO₄F (M' is one or more of V, Fe, Mn, and Ni), and Na₃(VO_{y})₂(PO₄)_{z}F_{3-2y} (0 ≤ y ≤ 1). The Prussian blue compound may be a class of compounds having sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1. These materials are all commercially available.

The modified compounds of the materials described above may be in the form of doping modification and/or surface-coating modification of the materials.

Typically, the positive electrode film layer further optionally includes a binder, a conductive agent, and other optional auxiliary agents.

As an example, the conductive agent may be one or more of superconducting carbon, acetylene black, carbon black, Ketjen black, a carbon dot, a carbon nanotube, super P (SP), graphene, and a carbon nanofiber.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

As an example, other optional auxiliary agents may be thickening agents, dispersants (such as sodium carboxymethylcellulose (CMC-Na)), or PTC thermistor materials.

Similar to the negative electrode active material, sodium metal is easily intercalated into the positive electrode active material described above, or is deposited on or intercalated into the positive electrode active material described above, and is also easily deintercalated or stripped from the positive electrode active material described above. During the charge-discharge cycles of the battery, the structure changes of the active material are minor, which is beneficial to extending the service life of the battery. In addition, the transition metal oxide can be easily synthesized and offers high energy density; the Prussian blue analog and polyanions exhibit good stability at the positive electrode.

According to some embodiments of the present application, the membrane resistance of the positive electrode is greater than or equal to 0.1 Ω and less than or equal to 50 Q; optionally, the membrane resistance of the positive electrode is greater than or equal to 0.1 Ω and less than or equal to 10 Ω.

The membrane resistance can be measured by any known method, such as the one-probe method, the four-probe method, or the DC two-probe method, with the contact area between the probe and the positive electrode plate set to 49π mm². In this embodiment, the membrane resistance R of the positive electrode plate is measured using a HIOKI BT23562 internal resistance tester. The upper and lower sides of the positive electrode plate are clamped between the two conductive terminals of the tester, with pressure applied to secure it. The diameter of the conductive terminals is 14 mm, and the applied pressure is 15 MPa-27 MPa, such that the membrane resistance of the positive electrode plate is measured.

The value of the membrane resistance affects the desolvation process of the sodium ion-solvent complex to a certain extent. A low membrane resistance results in reduced electrode polarization, and reduced concentration polarization at a low temperature, such that the desolvation can be promoted. By setting the membrane resistance of the positive electrode plate within this resistance range, the effect of the desolvation process is further optimized, which is more conducive to enhancing the low-temperature performance of the sodium secondary battery.

The sodium secondary battery further includes a separation film, which is provided between the positive electrode plate and the negative electrode plate. Serving as an insulating layer, the separation film effectively prevents the positive electrode plate and the negative electrode plate from contacting each other, thereby avoiding internal short circuits, while allowing sodium ions to pass through. The performance of the separation film determines the interface structure, internal resistance, and other properties of the sodium secondary battery, and directly affects the mechanical strength and safety performance of the battery.

The specific type of the material of the separation film is not limited and may include materials known in the art that can be used for the separation film of sodium secondary batteries. Those skilled in the art can select them according to needs. As an example, the material of the separation film may include, but is not limited to, one or more of polyolefin, fluoropolymer, cellulose, and glass fiber. The polyolefin may include, but is not limited to, one or more of polypropylene and polyethylene. These materials are all commercially available.

In some embodiments, in some embodiments, the separation film includes a base film and a coating layer located on one side/both sides of the base film, and the coating layer includes a filler. The filler may include an inorganic material, a polymer binder, and a dispersant; the inorganic material includes one or more of boehmite and silica; the polymer binder material includes one or more of polyvinylidene fluoride (PVDF) and polystyrene-acrylate; the dispersant material includes polyvinyl alcohol and the like. By providing a coating layer on one side/both sides of the separation film, the performance of the separation film can be improved and regulated. The performance of the separation film can be regulated by adjusting the type of filler. For example, a filler with thermal insulation and heat resistance properties may be added to enhance the heat resistance of the separation film. The specific type of the material of the base film is not limited, and may include, but is not limited to, one or more of polyethylene, polypropylene, and glass fiber. These materials are all commercially available.

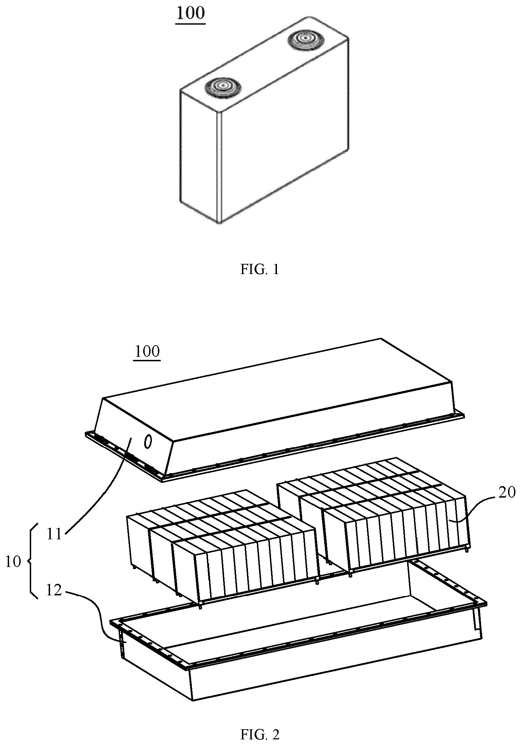

The embodiments of the present application do not particularly limit the shape of the sodium secondary battery, and it may have a cylindrical shape, a prismatic shape, or any other shape. FIG. 1 shows a sodium secondary battery 100 with a prismatic structure as one example. FIG. 1 is a schematic structural diagram of a sodium secondary battery 100 according to some embodiments of the present application.

In some embodiments, the sodium secondary battery 100 of the present application includes a case 10 and battery cells 20. The battery cells 20 are accommodated in the case 10. Referring to FIG. 2, FIG. 2 is a schematic diagram of an exploded structure of a sodium secondary battery 100 according to some embodiments of the present application. The case 10 is configured to provide an accommodating space for the battery cells 20, and the case 10 can be of various structures. In some embodiments, the case 10 may include a first part 11 and a second part 12. The first part 11 and the second part 12 are mutually lidded onto each other, and the first part 11 and the second part 12 jointly define an accommodating space for accommodating the battery cells 20. The second part 12 may be a hollow structure with one end open, and the first part 11 may be a plate-like structure. The first part 11 lids the open side of the second part 12, such that the first part 11 and the second part 12 jointly define the accommodating space. The first part 11 and the second part 12 may also each be a hollow structure with one side open, and the open side of the first part 11 lids the open side of the second part 12. Certainly, the case 10 formed by the first part 11 and the second part 12 may be of various shapes such as a cylinder and a rectangular parallelepiped.

In the sodium secondary battery 100, there may be a plurality of battery cells 20, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case 10. Certainly, it may be that in the sodium secondary battery 100, the plurality of battery cells 20 are first connected in series, in parallel, or in series-parallel to form battery modules, and then the plurality of battery modules are connected in series, in parallel, or in series-parallel to form a whole and accommodated in the case 10. The sodium secondary battery 100 may further include other structures. For example, the sodium secondary battery 100 may further include a busbar component for achieving electrical connection between the plurality of battery cells 20.

Each battery cell 20 may be a sodium secondary battery. The battery cell 20 may be cylindrical, flat, rectangular parallelepiped-shaped, or in other shapes.

The manufacturing methods for batteries include the stacking method and the winding method, that is, batteries can be classified into stacked batteries and wound batteries. The stacked batteries offer uniform current collection, low internal resistance, and high specific power. However, in order to ensure accuracy, the mold accuracy requirements are extremely high, the investment in equipment is high, the process is relatively complicated, and the production efficiency is low. The manufacture of the wound batteries is simple, and the production and assembly processes require general equipment precision, with high production efficiency and low cost. In terms of performance, the wound batteries exhibit excellent high- and low-temperature performance, rapid charging capabilities, ultra-long service life, stable high output voltage, robust structure, and strong shock resistance.

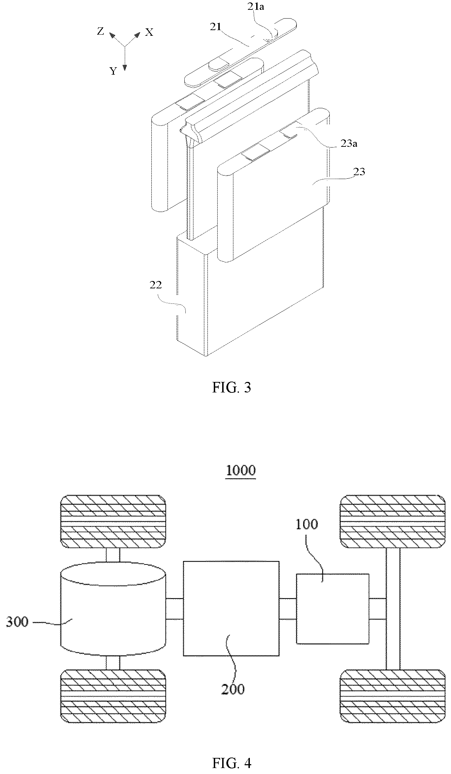

Referring to FIG. 3, FIG. 3 is a schematic diagram of an exploded structure of a battery cell 20 according to some embodiments of the present application. The battery cell 20 refers to the smallest unit forming a battery. As shown in FIG. 3, the battery cell 20 includes an end cover 21, a housing 22, an electrode assembly 23, and other functional components.

The end cover 21 is a component that lids the opening of the housing 22 to isolate the internal environment of the battery cell 20 from the external environment. Without limitation, the shape of the end cover 21 may be adapted to the shape of the housing 22 to match the housing 22. Optionally, the end cover 21 may be made of a material with a certain hardness and strength (for example, an aluminum alloy), such that the end cover 21 is not easily deformed when being squeezed or collided. This enables the battery cell 20 to have higher structural strength, and the safety performance can also be improved. Functional components, for example, an electrode terminal 21a, may be disposed on the end cover 21. The electrode terminal 21a may be configured to be electrically connected to the electrode assembly 23 to output or input the electrical energy of the battery cell 20. In some embodiments, the end cover 21 may also be provided with a pressure relief mechanism for releasing the internal pressure when the internal pressure or temperature of the battery cell 20 reaches a threshold value. The end cover 21 may also be made of a plurality of materials, such as copper, iron, aluminum, stainless steel, aluminum alloy, and plastic, which is not specifically limited in the embodiments of the present application. In some embodiments, an insulating member may be disposed on the inner side of the end cover 21, and the insulating member may be configured to isolate an electrical connecting part in the housing 22 from the end cover 21 to reduce the risk of a short circuit. Illustratively, the insulating member may be made of plastic, rubber, or the like.

The housing 22 is a component configured to form the internal environment of the battery cell 20 in combination with the end cover 21. The formed internal environment may be used to accommodate the electrode assembly 23, electrolytic solution, and other components. The housing 22 and the end cover 21 may be independent components. An opening may be provided on the housing 22, and the end cover 21 lids the opening to form the internal environment of the battery cell 20. Without limitation, the end cover 21 and the housing 22 may be integrated. Specifically, the end cover 21 and the housing 22 may form a common connection surface before other components are placed in the housing, and when the interior of the housing 22 needs to be encapsulated, the end cover 21 lids the housing 22. The housing 22 may be in various shapes and sizes, such as a rectangular parallelepiped, a cylinder, and a hexagonal prism. Specifically, the shape of the housing 22 may be determined based on the specific shape and size of the electrode assembly 23. The housing 22 may be made of a plurality of materials, such as copper, iron, aluminum, stainless steel, aluminum alloy, and plastic, which is not specifically limited in the embodiments of the present application.

The electrode assembly 23 is a component where the electrochemical reaction occurs in the battery cell 20. One or more electrode assemblies 23 may be accommodated in the housing 22. The electrode assembly 23 is mainly formed by winding or laminating a positive electrode plate and a negative electrode plate, and a separation film is usually disposed between the positive electrode plate and the negative electrode plate. The portions of the positive electrode plate and the negative electrode plate that contain the active substance constitute the body part of the electrode assembly, and the portions of the positive electrode plate and the negative electrode plate that do not contain the active substance each constitute a tab 23a. The positive electrode tab and the negative electrode tab may be located together at one end of the body part or separately at two ends of the body part. During charging and discharging process of the battery, the positive electrode active substance and the negative electrode active substance react with the electrolytic solution, and the tabs 23a are connected to the electrode terminals to form a current circuit.

The electrolytic solution and the sodium secondary battery disclosed in the embodiments of the present application can be used in electric devices that use sodium secondary batteries as power sources or in various energy storage systems that use sodium secondary batteries as energy storage elements. The electric device may be, but is not limited to, a mobile phone, a tablet personal computer, a laptop computer, an electric toy, an electric tool, an electric bicycle, an electric vehicle, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

The energy storage systems may be hydropower power, thermal power, wind power, solar power stations or other energy storage power systems.

For the convenience of description, an embodiment of the present application in which a vehicle 1000 is taken as the example of the electric device is used for description.

Referring to FIG. 4, FIG. 4 is a schematic structural diagram of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. The sodium secondary battery 100 is provided inside the vehicle 1000, and the sodium secondary battery 100 may be provided at the bottom, the head, or the tail of the vehicle 1000. The sodium secondary battery 100 may be used for powering the vehicle 1000. For example, the sodium secondary battery 100 may serve as an operational power source of the vehicle 1000. The vehicle 1000 may also include a controller 200 and a motor 300. The controller 200 is used for controlling the sodium secondary battery 100 to power the motor 300, e.g., for operation power needed by the vehicle 1000 for start-up, navigation, and driving.

In some embodiments of the present application, the sodium secondary battery 100 may not only serve as an operation power source for the vehicle 1000, but also as a driving power source for the vehicle 1000 to, instead of or in part instead of fuel or natural gas, provide driving power for the vehicle 1000.

The desolvation energy of a sodium ion-solvent complex formed by sodium ions of the sodium metal salt and the solvent in the electrolytic solution of the sodium secondary battery of the present application is less than or equal to 100 kJ/mol. This results in a low energy barrier for the desolvation process of the sodium metal salt at a low temperature, with a weak affinity between the sodium ions and the solvent molecules. It ameliorates the issue of insufficient battery capacity caused by the difficulty in desolvating solvated sodium ions at a low temperature, thereby enabling the sodium secondary battery to exhibit excellent low-temperature performance. As a result, the electric device and energy storage systems described above also possess excellent low-temperature performance.

The following describes the electrolytic solution for use in a sodium secondary battery and the preparation method for the sodium secondary battery and the performance test results in conjunction with specific examples. Those skilled in the art will understand that the electrolytic solution for use in a sodium secondary battery and the preparation method for the sodium secondary battery described in the present application are only examples, and any other suitable preparation method falls within the scope of the present application.

### Example 1

### 1. Preparation of positive electrode plate:

10 wt% polyvinylidene fluoride binder was thoroughly dissolved in N-methylpyrrolidone, and 10 wt% carbon black conductive agent and 80 wt% positive electrode active material Na₄Fe₃(PO₄)₂P₂O₇ were added to prepare a uniformly dispersed slurry. The surface of a piece of aluminum foil was coated with the slurry evenly, and the aluminum foil was then transferred to a vacuum drying oven for complete drying. The obtained electrode plate was calendered and then punched to obtain a positive electrode plate.

### 2. Preparation of negative electrode plate:

4 wt% carbon nanotube material and 1.6 wt% polymer binder sodium carboxymethylcellulose were added to water, and the mixture was stirred to form a uniform slurry. The surface of a piece of copper foil was coated with the slurry, and the copper foil was then transferred to a vacuum drying oven for complete drying. Subsequently, punching was performed to obtain a negative electrode plate.

### 3. Preparation of electrolytic solution:

In a glove box under argon atmosphere (H₂O < 0.1 ppm, O₂ < 0.1 ppm), a sodium salt sodium hexafluorophosphate (NaPF₆) was dissolved in diglyme (DEGDME) (first solvent) and tetrahydrofuran (THF) (second solvent), and the mixture was uniformly stirred to obtain an electrolytic solution with a sodium salt concentration of 0.5 mol/L, i.e., the electrolytic solution of Example 1.

### 4. Separation film:

A polypropylene film is used as the separation film.

### 5. Preparation of sodium secondary battery:

The positive electrode plate, the separation film, and the negative electrode plate were stacked in sequence, with the separation film positioned between the positive electrode plate and the negative electrode plate to provide isolation. The electrolytic solution described above was then added, and a stacked battery was assembled.

Except for different electrolytic solution formulas, the other steps of Examples 2-18 and Comparative Examples 1-3 were the same as those of Example 1.

### Examples 19-20

Except for the preparation of the negative electrode plate, the other steps were the same as those in Example 1.

### Preparation of negative electrode plate of Example 19:

90 wt% hard carbon, 5 wt% acetylene black, 4% binder styrene-butadiene rubber, and 1 wt% binder sodium carboxymethylcellulose were added to water, and the mixture was stirred to form a uniform slurry. The surface of a piece of copper foil was coated with the slurry, and the copper foil was then transferred to a vacuum drying oven for complete drying. Subsequently, punching was performed to obtain a negative electrode plate.

### Preparation of negative electrode plate of Example 20:

The hard carbon in Example 19 was replaced with soft carbon, and the other steps were the same as those of Example 19.

### Performance test methods

### 1. Coulombic efficiency:

The prepared sodium secondary battery was charged at 1/3 C constant current at 0 °C to 3.7 V, and then charged at a constant voltage of 3.7 V until the current dropped to 0.05 C to obtain a first charge capacity (Cc1); the battery was then allowed to discharge at 1/3 C constant current to 1.5 V to obtain a first discharge capacity (Cd1), and the coulombic efficiency of the sodium secondary battery was calculated according to the following formula.

The coulombic efficiency of the sodium secondary battery = first discharge capacity (Cd1)/first charge capacity (Cc1).

### 2. Capacity retention rate:

The sodium secondary battery was charged at 1 C constant current at 0 °C to 3.7 V, and then charged at a constant voltage of 3.7 V until the current dropped to 0.05 C, and then allowed to discharge to 1.5 V at 1 C constant current to obtain the first-cycle discharge capacity (Cd1); this charging and discharging process repeated until the nth cycle, and the discharge capacity of the sodium secondary battery after n cycles was obtained and recorded as Cdn. The capacity retention rate of the sodium secondary battery was calculated according to the following formula:

Capacity retention rate = discharge capacity after n cycles (Cdn)/first-cycle discharge capacity (Cd1).

### 3. Directive current resistance (DCR):

DCR refers to the resistance encountered by current within the battery cell. After the discharging process of the battery, due to polarization, the battery voltage exhibits a rebound phenomenon. The DC impedance technique utilizes the voltage difference between the instant just before the discharge ends and the stabilized voltage after the discharge ends to calculate the internal resistance of the battery during the intermittent discharge of the battery.

The sodium secondary battery was charged at 1 C constant current at 0 °C to 3.7 V, and then charged at a constant voltage of 3.7 V until the current dropped to 0.05 C, and then allowed to discharge to 1.5 V at 1 C constant current; subsequently, the battery was left to stand for 5 min (stabilization time) before continuing the next cycle. In each cycle, the battery voltage before discharge termination and the battery voltage after battery voltage stabilization were recorded, and then the DC impedance was calculated using the following formula: R = ΔU/I (where: ΔU is the voltage difference, R is the DCR, and I is the discharging current).

### 4. Sodium dendrite:

The sodium secondary battery after 100 cycles of the procedure described above was disassembled in a glove box under argon atmosphere (H₂O < 0.1 ppm, O₂ < 0.1 ppm), and the surface morphology of the negative electrode plate was visually observed to determine whether sodium dendrites were generated. If no white spots were observed on the negative electrode plate, it was determined that no sodium dendrite was generated; if sporadic white spots were observed on the negative electrode plate, it was determined that there was slight presence of sodium dendrites; if dense white spots were observed on the negative electrode plate, it was determined that there was severe presence of sodium dendrites.

The composition and performance test results of the examples and comparative examples are provided in Table 1.

### 5. Desolvation energy

A Vmp3 electrochemical workstation was used to conduct AC impedance testing on the sodium secondary batteries in the examples and comparative examples, such that the impedance spectrum of the desolvation process of the Na⁺-(solvent)ₓ complex was obtained. The desolvation energy of the Na⁺-(solvent)ₓ complex in the examples and comparative examples can be determined according to the Arrhenius equation.

**Table 1: Composition and performance test results of examples and comparative examples**

| Sample No. | Sodium salt | Sodium salt concentration / mol/L | First solvent/ Second solvent | V1:V 2 | Negativ e electrod e active material | Coulombic efficiency/ % | Capacit y retentio n rate/% | DC R /mΩ | Sodium dendrit e | Desolvation energy/kJ/mo 1 |
|---|---|---|---|---|---|---|---|---|---|---|
| Example 1 | NaPF₆ | 0.5 | DEGDME/TH F | 3:1 | / | 96.1 | 91.3 | 250 8 | None | 59 |
| Example 2 | NaPF₆ | 0.1 | DEGDME/TH F | 3:1 | / | 86.2 | 83.3 | 367 9 | None | 91 |
| Example 3 | NaPF₆ | 0.2 | DEGDME/TH F | 3:1 | / | 88.5 | 86.1 | 3311 | None | 83 |
| Example 4 | NaPF₆ | 0.8 | DEGDME/TH F | 3:1 | / | 95.4 | 90.5 | 268 6 | None | 61 |
| Example 5 | NaPF₆ | 1.2 | DEGDME/TH F | 3:1 | / | 91.6 | 86.5 | 298 5 | None | 73 |
| Example 6 | NaPF₆ | 0.5 | DEGDME/TH F | 1:1 | / | 92.2 | 87.4 | 300 7 | None | 71 |
| Example 7 | NaPF₆ | 0.5 | DEGDME/TH F | 1.5:1 | / | 94.3 | 88.8 | 294 0 | None | 65 |
| Example 8 | NaPF₆ | 0.5 | DEGDME/TH F | 5:1 | / | 92.7 | 87.8 | 297 8 | None | 70 |
| Example 9 | NaPF₆ | 0.5 | DEGDME/TH F | 10:1 | / | 85.6 | 82.1 | 399 6 | None | 93 |
| Example 10 | NaDFO B | 0.5 | DEGDME/TH F | 3:1 | / | 92.1 | 87.0 | 350 8 | None | 72 |
| Example 11 | NaFSI | 0.5 | DEGDME/TH F | 3:1 | / | 93.4 | 87.9 | 327 6 | None | 68 |
| Example 12 | NaOTf | 0.5 | DEGDME/TH F | 3:1 | / | 95.5 | 90.9 | 259 3 | None | 61 |
| Example 13 | NaTFSI | 0.5 | DEGDME/TH F | 3:1 | / | 92.6 | 87.6 | 346 1 | None | 70 |
| Example 14 | NaPF₆ | 0.5 | DEGDME/DO L | 3:1 | / | 94.0 | 88.3 | 297 0 | None | 66 |
| Example 15 | NaPF₆ | 0.5 | DME/THF | 3:1 | / | 92.9 | 88.0 | 296 6 | None | 69 |
| Example 16 | NaPF₆ | 0.5 | DME/DOL | 3:1 | / | 91.3 | 86.2 | 330 0 | None | 74 |
| Example 17 | NaPF₆ | 0.5 | TEGDME/THF | 3:1 | / | 95.2 | 90.1 | 269 3 | None | 62 |
| Example 18 | NaPF₆ | 0.5 | TEGDME/DO L | 3:1 | / | 93.2 | 87.5 | 348 9 | None | 68 |
| Example 19 | NaPF₆ | 0.5 | TEGDME/DO L | 3:1 | Hard carbon | 85.6 | 88.5 | 343 6 | None | 93 |
| Example 20 | NaPF₆ | 0.5 | TEGDME/DO L | 3:1 | Soft carbon | 83.8 | 86.1 | 357 3 | None | 98 |
| Comparativ e Example 1 | NaPF₆ | 1.5 | DEGDME/TH F | 3:1 | / | 82.3 | 79.3 | 456 5 | Slight | 124 |
| Comparativ e Example 2 | NaPF₆ | 0.5 | DEGDME | / | / | 81.2 | 73.5 | 562 3 | Severe | 151 |
| Comparativ e Example 3 | NaPF₆ | 0.5 | THF | / | / | 81.7 | 77.7 | 516 8 | Severe | 146 |

Note: V1:V2 represents the volume ratio of the first solvent to the second solvent; coulombic efficiency/% represents the coulombic efficiency value after 100 cycles of the battery; DCR represents the DCR value after 100 cycles of the battery, and the desolvation energy represents the desolvation energy of the Na⁺-(solvent)ₓ complex.

### Analysis of results:

1. By comparing Examples 1-20 to Comparative Examples 1-3, it can be seen that the desolvation energy of the Na⁺(solvent)ₓ complexes in Examples 1-20 was less than 100 KJ/mol, and the coulombic efficiency and the capacity retention rate after 100 cycles were higher than those of Comparative Examples 1-3; the battery DCR after 100 cycles was lower than that of Comparative Examples 1-3, and no sodium dendrite was observed, exhibiting better low-temperature performance. The desolvation energy of Comparative Examples 1-3 was greater than 100 KJ/mol, and the low-temperature performance was significantly lower than that of Examples 1-20. It can be seen that desolvation energy less than or equal to 100 KJ/mol could effectively enhance the low-temperature performance of the sodium secondary batteries.
2. By comparing Examples 1-20 and Comparative Example 1 to Comparative Examples 2-3, it can be seen that, because the solvent in Examples 1-20 and Comparative Example 1 was a combination of the first solvent and the second solvent, their coulombic efficiency and capacity retention rate after 100 cycles were higher than those of Comparative Examples 2-3, and the battery DCR after 100 cycles was lower than that of Comparative Examples 2-3. Except for slight presence of dendrites in Comparative Example 1, no dendrite was observed in Examples 1-20. In addition, it can be seen from Comparative Example 2, Comparative Example 3, and Example 1 that the desolvation energy of the Na⁺(solvent)ₓ complex in Comparative Example 2 using DEGDME alone and Comparative Example 3 using THF alone was greater than 100 KJ/mol, while in Example 1 using DEGDME and THF in combination, the desolvation energy was reduced to below 100 KJ/mol. The low-temperature performance of the battery in Example 1 was significantly better than that of Comparative Example 2 and Comparative Example 3. This demonstrated that the combination of the first solvent and the second solvent could enhance the low-temperature performance of the battery.
3. By comparing Examples 1-5 to Comparative Example 1, it can be seen that when the sodium salt concentration was 0.1-1.2
   mol/L, the coulombic efficiency and the capacity retention rate after 100 cycles were high, and no sodium dendrite was observed, exhibiting good battery performance. Especially when the sodium salt concentration was 0.2-0.8 mol/L, the battery performance was further improved. However, for Comparative Example 1 in which the sodium salt concentration exceeded 0.1-1.2 mol/L, although the solvent included the first solvent and the second solvent, due to the excessively high sodium salt concentration, the desolvation energy of the Na⁺(solvent)ₓ complex was greater than 100 KJ/mol, with slight presence of dendrites, and the battery performance was poorer than that of Examples 1-5. This demonstrated that the use of an electrolytic solution with a sodium salt concentration between 0.1 and 1.2 mol/L could enhance the low-temperature performance of the battery.
4. By comparing Example 1 to Examples 6-9, it can be found that when the volume ratio of the first solvent to the second solvent was 1:1 to 10:1, the coulombic efficiency and the capacity retention rate after 100 cycles of all examples were high, with low battery DCR and no presence of sodium dendrites, exhibiting excellent low-temperature performance. Especially when the volume ratio of the first solvent to the second solvent was 1.5:1 to 5:1, the battery DCR after 100 cycles was below 3000 mΩ.
5. By comparing Example 1 to Examples 10-13, it can be found that the low-temperature performance of the battery varied when the type of the sodium salt was different. The best performance was observed in Example 1 with sodium salt NaPF₆, followed by NaOTf, NaFSI, NaTFSI, and NaDFOB in descending order.
6. By comparing Example 1 to Examples 14-18, it can be seen that the type of the first solvent and the second solvent also had an impact on the low-temperature performance of the battery. In the examples in Table 1, for the first solvent, the sample using DEGDME in Example 1 exhibited the best performance, followed by TEGDME and DME. For the second solvent, the performance of the sample using THF in Example 1 was superior to that of the sample using DOL.
7. From the comparison of Examples 18-20, it can be concluded that both the "negative electrode-free sodium battery" with no active material on the negative electrode, and the conventional sodium battery with an active material on the negative electrode, exhibited excellent low-temperature performance. In addition, the performance of the sample without a negative electrode active material in Example 18 was superior to that of Examples 19 and 20 with negative electrode active materials, and the performance of the sample with hard carbon as the negative electrode active material in Example 19 was superior to that of the sample with soft carbon as the negative electrode active material in Example 20.

In summary, the present application provides an electrolytic solution for use in a sodium secondary battery, a sodium secondary battery, and an electric device. The electrolytic solution for use in a sodium secondary battery includes a sodium metal salt and a solvent, where the desolvation energy of a sodium ion-solvent complex formed by sodium ions of the sodium metal salt and the solvent is less than or equal to 100 kJ/mol. In this way, the reaction kinetics of the sodium secondary battery at a low temperature can be improved, thereby enhancing the low-temperature performance of the sodium secondary battery.

Finally, it should be noted that the above embodiments are only used to illustrate the technical solutions of the present application, but not to limit them. Although the present application has been described in detail with reference to the aforementioned embodiments, those of ordinary skill in the art should understand that they can still modify the technical solutions recorded in the aforementioned embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. An electrolytic solution for use in a sodium secondary battery,
the electrolytic solution comprising a sodium metal salt and a solvent,
wherein desolvation energy of a sodium ion-solvent complex formed by sodium ions of the sodium metal salt and the solvent is less than or equal to 100 kJ/mol.

2. The electrolytic solution for use in a sodium secondary battery according to claim 1,
wherein a molar concentration of the sodium metal salt is 0.1-1.2 mol/L.

3. The electrolytic solution for use in a sodium secondary battery according to claim 2,
wherein a molar concentration of the sodium metal salt is 0.2-0.8 mol/L.

4. The electrolytic solution for use in a sodium secondary battery according to claim 1,
wherein the solvent comprises a first solvent and a second solvent;
the first solvent comprises a chain ether solvent;
the second solvent comprises one or more of diethyl ether and cyclic ethers.

5. The electrolytic solution for use in a sodium secondary battery according to claim 4,
wherein the first solvent comprises one or more of glycol dimethyl ether, glycol diethyl ether, diglyme, triglyme, tetraglyme, dipropyl ether, and dibutyl ether; and/or
the second solvent comprises one or more of diethyl ether, 1,3-dioxolane, tetrahydrofuran, and methyltetrahydrofuran.

6. The electrolytic solution for use in a sodium secondary battery according to claim 4,
wherein a volume ratio of the first solvent to the second solvent is greater than or equal to 1:1 and less than or equal to 10:1.

7. The electrolytic solution for use in a sodium secondary battery according to claim 6,
wherein a volume ratio of the first solvent to the second solvent is greater than or equal to 1.5:1 and less than or equal to 5:1.

8. The electrolytic solution for use in a sodium secondary battery according to any one of claims 1 to 7,
wherein the sodium metal salt comprises one or more of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethylsulfonyl)imide.

9. A sodium secondary battery, comprising the electrolytic solution for use in a sodium secondary battery according to any one of claims 1 to 8.

10. The sodium secondary battery according to claim 9,
wherein the battery is a negative electrode-free sodium secondary battery.

11. The sodium secondary battery according to claim 9,
wherein the battery comprises a negative electrode, and the negative electrode comprises a negative electrode current collector and a negative electrode active material;
the negative electrode active material comprises one or more of a silicon-based material, a silicon-carbon material, a carbon material, and a selenium-based material.

12. The sodium secondary battery according to any one of claims 9 to 11,
wherein the battery comprises a positive electrode, and the positive electrode comprises a positive electrode current collector and a positive electrode active material;
the positive electrode active material comprises one or more of a transition metal oxide, a polyanion compound, and a Prussian blue analog.

13. The sodium secondary battery according to claim 12,
wherein a membrane resistance of the positive electrode is 0.1 Ω-50 Ω.

14. The sodium secondary battery according to claim 13,
wherein the membrane resistance of the positive electrode is 0.1 Ω-10 Ω.

15. An electric device, comprising the sodium secondary battery according to any one of claims 9 to 14.
